(19) Europäisches Patentamt
European Patent Office
Office européen des brevets

(11) **EP 3 583 614 B1**

(12) **EUROPÄISCHE PATENTSCHRIFT**

(45) Veröffentlichungstag und Bekanntmachung des Hinweises auf die Patenterteilung:
**04.05.2022   Patentblatt 2022/18**

(21) Anmeldenummer: **18709276.2**

(22) Anmeldetag: **16.02.2018**

(51) Internationale Patentklassifikation (IPC):
$H01F\ 5/06$ (2006.01)   $H01F\ 27/32$ (2006.01)
$C09K\ 5/02$ (2006.01)   $H01B\ 3/30$ (2006.01)
$H02K\ 3/30$ (2006.01)

(52) Gemeinsame Patentklassifikation (CPC):
**H01F 5/06; C09K 5/063; H01B 3/28; H01B 3/441; H01B 3/442; H01F 27/327; H02K 3/30**

(86) Internationale Anmeldenummer:
**PCT/EP2018/053945**

(87) Internationale Veröffentlichungsnummer:
**WO 2018/150000 (23.08.2018 Gazette 2018/34)**

(54) **ELEKTRISCHER WICKELKÖRPER MIT OPTIMIERTEN GEBRAUCHSEIGENSCHAFTEN UND VERBESSERTEM SCHUTZ GEGEN ÜBERHITZUNG**

ELECTRIC WINDING BODY WITH OPTIMISED PERFORMANCE CHARACTERISTICS AND IMPROVED PROTECTION AGAINST OVERHEATING

CORPS D'ENROULEMENT ÉLECTRIQUE PRÉSANTANT DES CARACTÉRISTIQUES D'UTILISATION OPTIMISÉES ET UNE MEILLEURE PROTECTION CONTRE LA SURCHAUFFE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2017   DE 102017001547**

(43) Veröffentlichungstag der Anmeldung:
**25.12.2019   Patentblatt 2019/52**

(73) Patentinhaber: **Smartpolymer GmbH**
**07407 Rudolstadt (DE)**

(72) Erfinder:
• **REDLINGSHÖFER, Benjamin**
**07389 Ranis (DE)**

• **GEISSENHÖNER, Martin**
**07407 Rudolstadt (DE)**
• **SCHACHE, Hannes**
**07407 Rudolstadt (DE)**
• **RIEDE, Sabine**
**07407 Uhlstädt-Kirchhasel (DE)**

(74) Vertreter: **Plate, Jürgen**
**Plate Schweitzer Zounek**
**Patentanwälte**
**Rheingaustrasse 196**
**65203 Wiesbaden (DE)**

(56) Entgegenhaltungen:
**EP-A1- 2 637 176         DE-A1- 10 329 583**
**DE-A1-102013 215 255    US-A1- 2004 056 537**
**US-A1- 2006 124 892**

**Beschreibung**

Die Erfindung betrifft einen elektrischen Wickelkörper, der durch Tränken mit einem mit Phasenwechselmaterial gefüllten thermoplastischen Material verbesserte Gebrauchseigenschaften aufweist. Diese Gebrauchseigenschaften betreffen eine verbesserte Wärmeableitung, Vibrationsdämpfung, Fixierung der Wicklungen und einen verbesserten Schutz vor Überhitzung durch Ausnutzen der sensiblen und latenten Wärmespeichereigenschaften beim Übergang vom teilkristallinen Zustand der Polymereinheiten in den amorphen.

Elektrische Wickelkörper umfassen Wicklungen, meist isolierte Kupferdrähte, die um einen Kern gewickelt sind. Der elektrische Wickelköper umfasst jegliche Art von Spulen in Form von Wicklungen und Wickelgüter, die geeignet sind ein Magnetfeld zu erzeugen oder zu detektieren. Diese Wickelkörper werden in elektrischen Betriebsmitteln wie Transformatoren, Wandlern, Rotoren und Statoren von elektrischen Maschinen eingesetzt. Es ist bekannt (DE19928323), höher beanspruchte Wicklungen, die in Wickelkörpern verarbeitet sind, mit Kunstharzen zu imprägnieren um den Wirkungsgrad zu verbessern durch Minimieren der Verlustleistung. Die Idee dahinter ist, die luftgefüllten Hohlräume zwischen den Wicklungen durch ein Kunstharz zu ersetzen. Das Kunstharz hat eine höhere Wärmeleitfähigkeit als Luft, kann also beim Gebrauch entstehende Wärme besser ableiten. Zudem hat das Kunstharz auch eine höhere Dichte als Luft und kann so Unwuchten besser ausgleichen und Vibrationen verringern. Das Imprägnieren dient der Erhöhung der Isolationsfestigkeit und daneben auch der Fixierung der Wicklungen, der Verbesserung der Wärmeabfuhr aus dem Wickelkörper sowie dem Korrosionsschutz. Es werden Duroplaste verwendet, um die Hohlräume zwischen den Wicklungen zu füllen, da diese eine sehr gute Fließfähigkeit im flüssigen Zustand besitzen und dadurch leichter in die Hohlräume eindringen können und thermisch stabiler sind. Nachteil der Duroplaste ist, dass diese in einem zusätzlichen Arbeitsschritt ausgehärtet werden müssen und der Phasenübergang in die feste Phase irreversibel ist und die Werkstoffe nach der Aushärtung sehr spröde sind. Wenn es zu einer thermischen Überlastung kommt, können diese Materialien diese Überlast nicht ausgleichen oder abfedern und werden zerstört. Zu solch einer thermischen Überlastung kann es häufig bei elektrischen Wickelkörpern kommen, die immer nur kurzzeitig, d.h. im Bereich von Sekunden bis zu einigen Minuten (< 10 min), aber dafür wiederholt in mehr oder minder großen Abständen in Betrieb sind. Für solche Wickelkörper ist oft eine Temperaturregelung durch Anpassung der Stromstärke nicht vorgesehen bzw. nicht sinnvoll.

US20130264896 beschreibt einen gegossenen Körper aus einem Stator bestehend aus Magnetspule auf einem Eisenkern, umhüllt mit einem Einspritzharz, welches ein Duroplastharz und ein mit diesem inkompatibles thermoplastisches Harz umfasst und welches anorganische Additive (Metallhydrate) enthält und eine Wärmeleitfähigkeit von ≥ 1,5 W/m . K und eine Flammfestigkeit nach UL94V-0 erfüllt. Die Menge an Metallhydrat ist ≥ 2 Anteilen an Gießharz. Ein gegossener Motor umfasst diesen gegossenen Körper. Aufgabe war es, einen Kunststoff als Isolator zu finden, der gleichzeitig niedrigen Schrumpf, hohe Wärmeleitfähigkeit und Flammfestigkeit bietet. Das Einspritzharz bildet eine Art Gehäuse für den Stator, die Art der Fertigung und die Zusammensetzung lassen es nicht zu, dass das Einspritzharz alle Luft zwischen den Wicklungen verdrängt, man erreicht ein verbessertes Wärmemanagement und eine Vibrationsstabilität, jedoch werden große Mengen an Einspritzharz benötigt und diese Art der Wicklungsumhüllung ist nur für Statoren geeignet. Zudem ist die Lösung in diesem Patent für eine Dauerbelastung der Spule ausgelegt, für eine kontinuierliche Abführung der Wärme durch ein hochwärmeleitfähiges Kunststoffgehäuse, das die Wärme an die Oberfläche abgibt.

Aus US2004/056537A1 ist ein elektrischer Motor bekannt, dessen Wickelkörper mit einem thermoplastischen Kunststoff eingekapselt ist, der ein Phasenwechselmaterial enthält. Zwischen den Wicklungen befindet sich kein solcher Kunststoff, sondern ein wärmeaktivierbarer Klebstoff.

Aus EP2637176A1 ist die Wicklung einer elektrischen Maschine bekannt, die mit einem Isoliermaterial umschlossen ist. Das Isolermaterial ist ein Gießharz, das ein Phasenwechselmaterial enthält.

Aus US2006/124892A1, DE102013215255A1 und DE10329583A1 sind thermoplastische Elastomere mit zur Wärmeregulierung zugemischten Phasenwechselmaterialien bekannt.

Der Erfindung liegt die Aufgabe zugrunde, einen Wickelkörper, der in Transformatoren, Wandlern, Rotoren und Statoren von elektrischen Maschinen zum Einsatz kommt, zu schaffen, der eine verbesserte thermische Gesamtkapazität besitzt, das Auftreten von Hot Spots vermindert und bei thermischer Überlast ausgleichend wirken kann. Die Erfindung soll bei kurzzeitigen Belastungen (Kurzzeitbetrieb) wirken, es sollen Wärmespitzen abgefangen werden bei einem sehr geringen Materialeinsatz. Zudem soll die Erfindung bei Wicklungen sowohl für Statoren als auch für Rotoren zum Einsatz kommen.

Diese Aufgabe wird erfindungsgemäß durch die Merkmale von Anspruch 1 gelöst. Alle Hohlräume zwischen den Wicklungen werden mit geringen Mengen an einem thermoplastischen Kunststoffmaterial (auch bezeichnet als Kompositwerkstoff oder Compound) ausfüllt, welcher ein Netzwerk aus einem thermoplastischen Elastomer (TPE) mit einem darin verteilten Phasenwechselmaterial (PCM) umfasst. Die thermoplastischen Elastomere sollten einen niedrigen Erweichungspunkt haben, der Zersetzungspunkt der Schmelze sollte bei einer Temperatur oberhalb der kritischen Gebrauchstemperatur der Wickelkörper von 180 °C liegen. Die thermoplastischen Elastomere weisen allgemein ein Glastemperatur $T_g$ von weniger als 0 °C auf, jedoch keinen festen Schmelzpunkt. Das TPE besteht vorzugsweise aus einem Styrol-Blockcoplymer (TPE-S), welches durch seine polymere Netzwerkstruktur gekennzeichnet ist, in der das PCM physikalisch gebunden ist. Das TPE-S ist ausgewählt aus der Gruppe Styrol-Blockcopolymere wie Styrol-Butadien-Styrol (SBS), Styrol-Ethylen-Butylen-Styrol (SEBS), Styrol-Ethylen-Propylen-Styrol-Block-Copolymer (SEPS), Styrol-Ethylen-Ethylen-Propylen-Styrol-Block-Copolymer (SEEPS) und Methyl Butadien Styrol (MBS), kommerziell erhältlich z.B. unter den Bezeichnungen ®Kraton (Kraton Polymers), ®Septon (Kuraray), ®Styroflex (BASF), ®Thermolast (Kraiburg TPE) oder ®Saxomer (PCW). Besonders geeignet sind solche TPE-S, die eine niedrige Glasübergangstemperatur und sehr gute Fließfähigkeit (niedrige Viskosität) bei Temperaturen über 100 °C aufweisen. Es ist von Vorteil, wenn das TPE-PCM-Compound eine sehr gute Fließfähigkeit zeigt, das heißt einen Schmelzflussindex von mindestens 15 g/10 min (190 °C/2,16 kg, gemessen nach ISO 1133-1), besonders bevorzugt mindestens 20 g/10 min (190 °C/2,16 kg, gemessen nach ISO 1133-1). Die Masse TPE-S im späteren Compound sollte 10 Gew.-% nicht unterschreiten, bevorzugt liegt sie zwischen 15 und 25 Gew.-%.

Die Verdrängung der Luft aus den Hohlräumen zwischen den Wicklungen erfolgt hauptsächlich durch die Wirkung von Kapillarkräften, durch die das thermoplastische Material in diese Hohlräume "gesaugt" wird. Damit das thermoplastische Kunststoffmaterial bis in das Innerste der Wicklung vordringen kann und nicht irgendwo Hohlräume verbleiben, in denen später Teilentladungen auftreten könnten, wird nicht nur die thermoplastische Kunststoffmasse erwärmt, sondern auch das Wickelgut auf eine Temperatur deutlich oberhalb der Wärmeformbeständigkeitstemperatur des TPE-PCM-Compounds nach DIN EN ISO 75-1,-2,-3 vorgewärmt, meist auf Temperaturen zwischen 100 und 150 °C. Ohne eine solche Vorwärmung käme es im Wickelgut frühzeitig zu Erstarrungsvorgängen und das bereits erstarrte PCM-Compound würde das Eindringen weiteren PCM-Compounds verhindern. Diese Erwärmung kann erfolgen, indem das Wickelgut in einem Ofen platziert wird oder elektrischer Strom angelegt wird. Die letztgenannte Methode hat den Vorteil, dass die Energiezufuhr auch während des Tränkens aufrechterhalten werden kann. Die Kapillarkräfte bewirken zusammen mit Adhäsionskräften gleichzeitig auch, dass das Material bei Erweichung nicht sofort wieder austritt und "ausblutet", denn bei den Arbeitstemperaturen des Wickelkörpers oberhalb von 100 °C liegt das TPE-PCM Compound immer in fließfähiger Form vor.

Die Verwendung von mit Phasenwechselmaterialien gefüllten Compunds als Füllmaterial hat zudem den Vorteil, dass bei Gebrauch, nach dem Anlegen von Strom, das Phasenwechselmaterial von der festen in die flüssige Phase übergeht und dabei gleichzeitig sich das Volumen ausdehnt. Das erklärt die Beobachtung, dass der Wärmeregulierungseffekt nach dem ersten Gebrauch sich noch verbessert, da durch die Volumenzunahme weitere Luft aus den Hohlräumen zwischen den Wicklungen verdrängt wird.

Eine Methode zum Befüllen der Hohlräume zwischen den Wicklungen des elektrischen Wickelkörpers kann darin bestehen, dass das thermoplastische Material in einer Tauchvorrichtung mittels Heizplatte erhitzt wird, beispielsweise auf eine Verarbeitungstemperatur von 170°C. Zur Erzielung einer homogenen Masse wird das thermoplastische Material gerührt. Der Wickelkörper wird im Ofen 30 min lang auf beispielsweise 120°C vorgewärmt. Nach Temperaturangleich der Schmelze des thermoplastischen Materials mit der Temperatur des Tauchwerkzeugs wird der vorgeheizte Wickelkörper senkrecht in die Tauchvorrichtung gedrückt und unter minimalen Kraftaufwand füllt sich vollständig das Lückenvolumen des Wickelkörpers. Danach wird der Wickelkörper aus der Tauchvorrichtung herausgezogen und auf Raumtemperatur abgekühlt. Beim Herausnehmen aus dem Tauchbad tropft TPE-PCM-Compoundmasse, die nicht in die Wicklungen eingedrungen ist, ab. Bei Bedarf, das hängt vom Wickelkörper ab, wird überschüssiges thermoplastisches Material außerhalb der Wicklungen abgetragen. Danach erfolgt ein Tempern des getauchten Wickelkörpers im Ofen, z.B. im vorgeheizten Ofen für 2h bei 120°C. Auch bei diesem Schritt kann überschüssiges TPE-PCM-Compoundmaterial noch abtropfen. Durch die Wärmebehandlungen werden die Kupferwicklungen formschlüssig mit dem polymeren Füllmaterial bedeckt. Danach wird der Wickelkörper wieder auf Raumtemperatur abgekühlt.

Man kann den TPE-PCM Compound auch durch Besprühen oder Bestreichen des vorgewärmten Wickelkörpers mit dem erwärmten TPE-PCM-Compound aufbringen. Dabei wurde beobachtet, dass zum Beispiel nach dem Bestreichen und der anschließenden Temperung oberflächlich auf den Wicklungen kein TPE-PCM-Compound mehr zu sehen ist, d.h. an diesen Stellen die Masse durch die Kapillarkräfte aufgesogen wurde. Nur an weiteren Hohlräumen oder Nuten an der Oberfläche, wo die Kapillarkräfte nicht wirken, befinden sich noch geringe Mengen an TPE-PCM-Compound. Auf diese Weise werden nur sehr geringe Mengen an Füllmasse benötigt um Wärmespitzen bei Kurzzeitbelastung zu vermeiden.

Auf diese Weise kann diese Art der Thermoregulierung des Wickelgutes auch für Rotorwicklungen angewendet werden, allerdings ist in diesen Fällen eine dünne zusätzliche äußere Schutzschicht (Versiegelung) notwendig, die das thermoplastische Füllmaterial während des Gebrauchs im Rotor hält. Das kann eine Schutzschicht bestehend aus PE, PP, PA, PMMA, PS, PVC mit einer Dicke von 100 bis 500 μm sein, aufgebracht mittels Gießen, Tauchen, Sprühen oder Spritzguss.

Eine andere Ausführungsform ist die Verwendung einer Spritz- oder Fördervorrichtung z.B. einer Heißklebepistole zur Befüllung des Lückenvolumens.

Mittels mechanischen / hydraulischen / pneumatischen Drucks wird das aufgeschmolzene TPE-PCM-Compound in das Lückenvolumen des Wickelkörpers gespritzt oder es umhüllt ihn vollständig. Danach erfolgt ein Tempern des getauchten Wickelkörpers im Ofen, z.B. im vorgeheizten Ofen für 2h bei 120°C. Dadurch wird zusätzlich ein Eindringen des PCM-Compounds in die Wicklungskapillare unterstützt. Als thermoplastisches Material kommen alle thermoplastischen Kunststoffe in Frage, die die oben genannten Bedingungen bezüglich Schmelzpunkt und Fließfähigkeit erfüllen und gleichzeitig ein Netzwerk zur Bindung von Phasenwechselmaterialien ausbilden können. Es handelt sich dabei bevorzugt um thermoplastische Elastomere, insbesondere Styrol-Blockcopolymere (TPE-S). Den thermoplastischen Materialien können neben den Phasenwechselmaterialien weitere Additive von bis zu 20 Gew.-% zugesetzt werden wie elektrisch nicht-leitfähige Materialien bzw. auch leitfähige Materialien in Anteilen unterhalb der Perkolationsschwelle, Additive, die die Wärmeleitfähigkeit erhöhen, nicht-magnetische Materialien, die die Dichte erhöhen, Flammschutzmittel, die das Brandverhalten bei Überlast, insbesondere des Cu-Lack-Drahtes positiv beeinflussen, Agentien, die das Fließverhalten beeinflussen.

Der Mengenanteil dieser Additive an der thermoplastischen Kunststoffmasse kann zwischen 0 bis 20 Gew.-% liegen.

Den thermoplastischen Elastomeren, die ein polymeres Netzwerk für Phasenwechselmaterialien bilden, werden bevorzugt zwischen 75 bis 85 Gew.-% Phasenwechselmaterialien zugesetzt, um eine optimale Wirkung zu erzielen. Die Phasenübergangs-(Schmelz-)temperatur der Phasenwechselmaterialien wird der Gebrauchstemperatur der Wickelkörper angepasst. Sie darf nicht zu niedrig gewählt werden, dann kann der Effekt der Wärmespeicherung während des Schmelzens nicht ausgenutzt werden und die Temperatur der gefüllten Wickelkörper entwickelt sich ähnlich der Temperaturkurve einer Wickelfüllung mit ungefüllten Kunststoffmassen.

Ein zu niedrigerer Schmelzpunkt(< 60°C) genüber der Arbeitstemperatur hat zur Folge, dass bei Normalbelastung der Spule bereits Grundtemperaturen vorliegen, die größer als die Schmelztemperatur des PCMs ist (beispielsweise bei einer PCM-Füllung mit einer Schmelztemperatur von 42°C). Somit hat die latente Wärmespeicherung keinen Einfluss mehr und nur noch der sensible Anteil steht zur Aufnahme der Abwärme bereit. Die maximale Arbeitstemperatur bestimmt die Auswahl des PCM-Schmelzpunkts. Bei einer Arbeitstemperatur, die nicht größer als 80°C ist, wird beispielsweise ein PCM mit einem Schmelzpunkt von 62°C ausgewählt.

Als Phasenwechselmaterial eignen sich Dialkylether mit langkettigen Alkylresten, n-Alkane, ein- oder mehrwertige Alkohole (z.B. Polyethylenglykol), PE-Wachs, jeweils mit Schmelztemperaturen im Bereich von 40 bis 140°C und bevorzugt zwischen 80 und130°C. Als "Dialkylether mit langkettigen Alkylresten" werden dabei solche bezeichnet, die in beiden Alkylresten zusammen mindestens 28 Kohlenstoffatome aufweisen. Das sind beispielsweise: Di-n-myristyl-ether (Schmelzpunkt 44 °C), Di-n-cetyl-ethern (Schmelzpunkt 54 °C) oder Di-n-stearyl-ether (Schmelzpunkt 62 °C), erhältlich unter der Bezeichnung ®Nacol ether 14, ®Nacol ether 16 bzw. ®Nacol ether 18 von Sasol. Bei polymeren Phasenwechselmaterialien beträgt das Molekulargewicht allgemein 100.000 g/mol oder weniger, bevorzugt 30.000 g/mol oder weniger. Der Wärmeregulierungseffekt hängt zum einen vom Anteil PCM im Füllmaterial und von der Menge an polymerem Füllmaterial zwischen den Wicklungen ab.

Treten während des Betriebes der Wickelkörper Überhitzungen auf, so nimmt das thermoplastische Material überschüssige Wärme auf, sowohl sensible Wärme als auch latente beim Übergang von einem teilkristallinen in einen amorphen Zustand und leitet diese aufgrund der guten Wärmeleitfähigkeit von über 0,2 W/mK weiter an Kühleinrichtungen. Durch die latente Wärmespeicherung können Schäden durch Überhitzung vermieden werden bzw. wird deren Eintritt verzögert.

Vorteilhafterweise werden die erfindungsgemäßen Wickelkörper eingesetzt in Anwendungen, wo diese Wickelkörper immer nur kurzzeitig, d.h. im Bereich von Sekunden bis zu einigen Minuten (< 10 min), aber dafür wiederholt in mehr oder minder großen Abständen in Betrieb sind. Beispiele dafür sind Fensterheber, elektrische Türöffner, Bedienung von Jalousien und ähnliche.

Beispiele

Messmethode

Die Temperaturbestimmung eines Wickelkörpers (3) erfolgt über die Messung des widerstandsabhängigen Spannungsabfalls, der direkt am Kommutator über einen Zeitraum von 2min in einem Zeitabstand von 1 s geloggt wird. Mit dem Labornetzgerät Manson HCS-3202 (1) wird ein elektrischer Strom von 8A in die Wicklung eingespeist. Mit dem Data Logger C-122 (2) wird im Sekundenabstand der temperaturabhängige Spannungsabfall gemessen. Netzgerät (1), Data Logger (2) und Wickelkörper (3) sind in einem Schaltkreis parallel geschaltet. Die Berechnung der Temperatur wurde mit folgender Gleichung durchgeführt:

$$\rho(T) = \rho(T_0) * (1 + \alpha * (T - T_0))$$

wobei $\alpha$ der Temperaturkoeffizient ($\alpha_{Kupfer}$ = 0.00393 1/K), T die Temperatur und $T_0$ eine beliebige Temperatur, bei der der spezifische elektrische Widerstand $\rho(T_0)$ bekannt ist. Da die Wärmeentwicklung der Ankerspule lokalen Schwankungen unterworfen ist, wird demzufolge ein Durchschnittswert der Temperatur an den gefüllten Spulen bestimmt.

Beispiel 1 ohne Füllung

An einem handelsüblichen Wickelkörper mit Kupferwicklungen, Durchmesser Cu-Draht 0,5mm, Länge 15m, ohne integrierte Füllung wird nach der oben genannten Messmethode die temperaturabhängige Widerstandsänderung gemessen und die Temperatur berechnet. Das Ergebnis der Messung ist in Zeichnung 1, Kurve 1 (ohne Füllung) dargestellt. Diese Kurve dient Vergleichs-zwecken.

Beispiel 2 mit PE

Ein fließfähiges PE der Firma LyondellBasell (®Lupolen 1800S) wird auf die Spule nach Beispiel 1, deren Gewicht vorher bestimmt wurde, durch die Methode Tauchen oder Spritzen integriert. Dazu wird die Spule vor dem Füllen auf eine Temperatur von 120°C erwärmt und nach dem Füllen in einer Wärmekammer bei 140 °C 30 min gehalten und anschließend auf Raumtemperatur abgekühlt. Dadurch werden die Kupferwicklungen und alle Hohlräume in den Wicklungen formschlüssig mit dem PE bedeckt. Durch Messen des Gewichts der Spule nach dem Tauchen oder Spritzen wird die Menge PE, die in die Windungen der Spule eingedrungen ist, bestimmt. Die Masse beträgt 4 g. Dann erfolgt die Bestimmung der Temperaturänderung nach dem oben beschriebenen Verfahren. Das Ergebnis der Messung ist in Zeichnung 1, Kurve 2 (mit PE) dargestellt.

Beispiel 3 mit PE und Graphit

Ein PE der Firma LyondellBasell (®Lupolen 1800S) wird mit 20% Graphit (SC20O, Fa. Kropfmühl) gefüllt. Das fließfähige PE wird auf die Spule nach Beispiel 1, deren Gewicht vorher bestimmt wurde, durch die Methode Tauchen oder Spritzen und Tempern entsprechend Beispiel 2 integriert. Durch Messen des Gewichts der Spule nach dem Tauchen oder Spritzen wird die Menge PE, die in die Windungen der Spule eingedrungen ist, bestimmt. Die Masse beträgt 4 g. Dann erfolgt die Messung der Temperaturänderung nach dem oben beschriebenen Verfahren. Das Ergebnis der Messung ist in Zeichnung 1, Kurve 3 (PE + Graphit) dargestellt.

Beispiel 4 mit PCM 82°C

Ein PCM-Compound (OC.82, Fa. Smartpolymer, Schmelzpunkt 82 °C, 80 Ma.-% PCM in einem TPE-S (Kuraray, ®Septon 4055) Netzwerk wird auf die Spule nach Beispiel 1, deren Gewicht vorher bestimmt wurde, durch die Methode Tauchen oder Spritzen und Tempern entsprechend Beispiel 2 integriert. Durch Messen des Gewichts der Spule nach diesem Vorgang wird die Menge PCM-Compound, die in die Windungen der Spule eingedrungen ist, gemessen. Die Masse beträgt 4 g. Dann erfolgt die Messung der Temperaturänderung nach dem oben beschriebenen Verfahren. Das Ergebnis der Messung ist in Zeichnung 1, Kurve 4 (mit PCM 82°C) dargestellt.
Auswertung der Versuchsergebnisse, dargestellt in Zeichnung 1:

Auswertung Kurve 1 ohne Füllung

Nach einer Betriebszeit von 120s erreicht die Temperatur an der ungefüllten Spule eine Maximaltemperatur von 160°C. Bei noch höheren Temperaturen kommt es zur thermischen Schädigung der Cu-Spule.

Auswertung Kurve 2 PE

Durch die Verdrängung der Luft aus dem Lückenvolumen der Spule durch das PE erhöhen sich die Wärmeleitfähigkeit sowie die thermische Masse. Das PE dient als sensibler Wärmespeicher und speichert die entstehende Abwärme, ein gedämpfter Temperaturanstieg findet statt. Gegenüber Wicklungen ohne Füllung kann eine längere Betriebszeit von ca. 30% ermöglicht werden bis die Maximaltemperatur erreicht ist. Bei gleicher Betriebszeit kann die Maximaltemperatur um ca. 18% gesenkt werden (Kurve "mit PE").

Auswertung Kurve 3 PE + Graphit

Durch die Verdrängung der Luft aus dem Lückenvolumen der Spule durch PE mit Graphit erhöhen sich die thermische Masse sowie die Wärmeleitfähigkeit gegenüber Luft sowie PE ohne Graphit von 0,3 auf 0,9W/m*K. Das PE mit Graphit dient als sensibler Wärmespeicher mit erhöhter Wärmeleitfähigkeit wodurch die Abwärme schneller abgeführt und gespeichert wird, ein gedämpfter Temperaturanstieg findet statt. Gegenüber Wicklungen ohne Füllung kann eine längere Betriebszeit von ca. 55% ermöglicht werden bis die Maximaltemperatur erreicht ist. Bei gleicher Betriebszeit kann die Maximaltemperatur um ca. 22% gesenkt werden.

Auswertung Kurve 4 mit PCM 82°C

Durch die Verdrängung der Luft aus dem Lückenvolumen der Spule durch das Kunststoffgemisch TPE-S mit PCM 82°C (Kurve 4) erhöht sich die Wärmeleitfähigkeit sowie die thermische Masse. Durch das sehr gute Fließverhalten ist das TPE-PCM-Compound optimal zwischen die Windungen eingedrungen wodurch die Wärmeübergänge erhöht wurden. Fast gleichzeitig setzt auch der Effekt der latenten Wärmespeicherung ein, siehe hierzu als Vergleich den Kurvenverlauf ohne Füllung, schon nach 40sec haben die Windungen 80°C erreicht, während bei Füllung mit dem TPE_PCM Compound 80 °C erst nach ca. 95 s erreicht werden. Deshalb ist der Anstieg dieser Kurve schon sehr früh niedriger als bei den anderen Kurven. Das PCM 82°C dient als latenter Wärmespeicher mit bis zu 2-4fach höherer Speicherkapazität gegenüber PE und speichert die entstehende Abwärme, ein gedämpfter Temperaturanstieg findet statt. Auf Grund des Phasenwechsels bei 82°C wird die entstehende Abwärme zur Phasenumwandlung fest-flüssig genutzt, bei der in einem kleinen Temperaturbereich ein Vielfaches an Energie gespeichert werden kann. Durch das Durchschreiten des Phasenwechsels findet eine Volumenausdehnung statt. Diese begünstigt eine Anpassung des PCMs an die Oberfläche des Wickelkörpers, wodurch Übergangswiderstände zusätzlich minimiert werden und die Wärmeübertragung erhöht wird. Gegenüber Wicklungen ohne Füllung (Kurve 1) kann eine längere Betriebszeit von ca. 75% ermöglicht werden bis die Maximaltemperatur erreicht ist. Bei gleicher Betriebszeit kann die Maximaltemperatur um ca. 30% gesenkt werden. Gegenüber Wicklungen mit PE Füllung (Kurve 2) kann eine längere Betriebszeit von ca. 40% ermöglicht werden bis die Maximaltemperatur erreicht ist. Bei gleicher Betriebszeit kann die Maximaltemperatur um ca. 15% gesenkt werden.

Gegenüber Wicklungen mit PE und Graphit Füllung (Kurve 3) kann eine längere Betriebszeit von ca. 20% ermöglicht werden bis die Maximaltemperatur erreicht ist. Bei gleicher Betriebszeit kann die Maximaltemperatur um 8% gesenkt werden.

## Patentansprüche

1. Elektrischer Wickelkörper, umfassend elektrisch leitfähige Wicklungen um einen Kern, wobei die Hohlräume zwischen den Wicklungen durch ein thermoplastisches Kunststoffmaterial formschlüssig ausgefüllt sind, wobei das thermoplastische Kunststoffmaterial eine Mischung aus

   a) einem netzwerkbildenden thermoplastischen Elastomer, das im Bereich von 120 - 150 °C eine sehr gute Fließfähigkeit und einen Schmelzflussindex von mindestens 15 g/10 min (190 °C/2,16 kg, gemessen nach ISO 1133-1) aufweist und
   b) einem Phasenwechselmaterial mit einer Phasenwechseltemperatur, die zwischen 40 °C und 140 °C liegt, umfasst, wobei das Phasenwechselmaterial in dem thermoplastischen Kunststoffmaterial in einem Anteil von 50 bis 85 Gew.-% enthalten ist.

2. Wickelkörper nach Anspruch 1, **dadurch gekennzeichnet, dass** das netzwerkbildende thermoplastische Elastomer ein styrolhaltiges Block-Copolymer ist, bevorzugt Styrol/Butadien/Styrol (SBS), SEBS, SEPS, SEEPS und MBS, und in einem Anteil von mindestens 10 Gew.-% vorliegt, bevorzugt zwischen 15 Gew.-% bis 25 Gew.-%, bezogen auf das Gewicht des Kunststoffmaterials.

3. Wickelkörper nach Anspruch 1 oder 2, **dadurch gekennzeichnet, dass** das Phasenwechselmaterial eine Schmelztemperatur zwischen 40 °C und 140 °C aufweist und bevorzugt ein Alkoholether, ein Dialkylether, ein Paraffin oder ein natürliches oder synthetisches Wachs ist.

4. Elektrischer Wickelkörper nach einem oder mehreren der Ansprüche 1 bis 3, **dadurch gekennzeichnet, dass** die Zersetzungstemperatur des thermoplastischen Kunststoffmaterials oberhalb der kritischen Gebrauchstemperatur des elektrischen Wickelkörpers liegt.

5. Elektrischer Wickelkörper nach einem oder mehreren der Ansprüche 1 bis 4, **dadurch gekennzeichnet, dass** das Phasenwechselmaterial in dem thermoplastischen Kunststoffmaterial in einem Anteil von 70 bis 85 Gew.-% enthalten ist.

6. Elektrischer Wickelkörper nach einem oder mehreren der Ansprüche 1 bis 5, **dadurch gekennzeichnet, dass** das thermoplastische Kunststoffmaterial funktionelle Additive enthält, die die Wärmeleitfähigkeit erhöhen, die die Dichte erhöhen, die das Fließverhalten der Schmelze beeinflussen und/oder als Flammschutzmittel wirken.

7. Elektrischer Wickelkörper nach Anspruch 6, **dadurch gekennzeichnet, dass** der Anteil der funktionellen Additive 0 bis 20 Gew.-% beträgt, bezogen auf das Gesamtgewicht des thermoplastischen Kunststoffmaterials.

8. Elektrischer Wickelkörper nach einem oder mehreren der Ansprüche 1 bis 7, **dadurch gekennzeichnet, dass** er von einer äußeren Schutzschicht umgeben ist, die das thermoplastische Kunststoffmaterial auch bei Anwendung für Rotorwicklungen im Wickelkörper hält, wobei die Schutzschicht bevorzugt aus PE, PP, PA, PMMA, PS oder PVC besteht und bevorzugt eine Dicke von 100 bis 500 $\mu$m aufweist.

9. Elektrischer Wickelkörper nach einem oder mehreren der Ansprüche 1 bis 8, **dadurch gekennzeichnet, dass** er Bestandteil eines Transformators, eines Wandlers oder eines Rotors oder Stators einer elektrischen Maschine ist, wo diese Wickelkörper nur dazu geeignet sind, immer nur kurzzeitig, d.h. im Bereich von Sekunden bis zu 10 Minuten, dafür wiederholt in mehr oder minder großen Abständen in Betrieb zu sein.

10. Elektrischer Wickelkörper nach einem oder mehreren der Ansprüche 1 bis 9, **dadurch gekennzeichnet, dass** das netzwerkbildende thermoplastische Elastomer einen Schmelzflussindex von mindestens 20 g/10 min (190 °C/2,16 kg, gemessen nach ISO 1133-1) aufweist.

**11.** Elektrischer Wickelkörper nach einem oder mehreren der Ansprüche 1 bis 10, **dadurch gekennzeichnet, dass** das Phasenwechselmaterial eine Phasenwechseltemperatur zwischen 80 und 130 °C aufweist.

**Claims**

**1.** Electrical winding form comprising electrically conductive windings around a core, where the cavities between the windings are filled in a form-fitting manner by a thermoplastic material, wherein the thermoplastic material comprises a mixture of

  a) a network-forming thermoplastic elastomer which, in the range of 120-150 °C, has very good flowability and a melt flow index of at least 15 g/10 min (190 °C/2.16 kg, measured to ISO 1133-1) and
  b) a phase change material having a phase change temperature between 40 °C and 140 °C, wherein the phase change material is present in the thermoplastic material in a proportion of 50 % to 85 % by weight.

**2.** Winding form according to Claim 1, **characterized in that** the network-forming thermoplastic elastomer is a styrene-containing block copolymer, preferably styrene/butadiene/styrene (SBS), SEBS, SEPS, SEEPS and MBS, and is present in a proportion of at least 10 % by weight, preferably between 15 % by weight and 25 % by weight, based on the weight of the plastics material.

**3.** Winding form according to Claim 1 or 2, **characterized in that** the phase change material has a melting temperature between 40 °C and 140 °C and is preferably an alcohol ether, a dialkyl ether, a paraffin or a natural or synthetic wax.

**4.** Electrical winding form according to one or more of Claims 1 to 3, **characterized in that** the breakdown temperature of the thermoplastic material is above the critical use temperature of the electrical winding form.

**5.** Electrical winding form according to one or more of Claims 1 to 4, **characterized in that** the phase change material is present in the thermoplastic material in a proportion of 70 % to 85 % by weight.

**6.** Electrical winding form according to one or more of Claims 1 to 5, **characterized in that** the thermoplastic material contains functional additives that increase thermal conductivity, increase density, affect the flow characteristics of the melt and/or act as flame retardants.

**7.** Electrical winding form according to Claim 6, **characterized in that** the proportion of the functional additives is 0 % to 20 % by weight, based on the total weight of the thermoplastic material.

**8.** Electrical winding form according to one or more of Claims 1 to 7, **characterized in that** it is surrounded by an outer protective layer that keeps the thermoplastic material within the winding form even in the case of use for rotor windings, where the protective layer preferably consists of PE, PP, PA, PMMA, PS or PVC and preferably has a thickness of 100 to 500 $\mu$m.

**9.** Electrical winding form according to one or more of Claims 1 to 8, **characterized in that** it is part of a transformer, a transducer or a rotor or stator of an electrical machine, where these winding forms are only ever capable of operation for a brief period, i.e. within the range from seconds up to 10 minutes, but repeatedly at greater or lesser intervals.

**10.** Electrical winding form according to one or more of Claims 1 to 9, **characterized in that** the network-forming thermoplastic elastomer has a melt flow index of at least 20 g/10 min (190 °C/2.16 kg, measured to ISO 1133-1).

**11.** Electrical winding form according to one or more of Claims 1 to 10, **characterized in that** the phase change material has a phase change temperature between 80 and 130 °C.

**Revendications**

**1.** Bobine électrique, comprenant des enroulements électriquement conducteurs autour d'un noyau, dans laquelle les interstices entre les bobines sont remplis par complémentarité de formes par un matériau plastique thermoplastique, dans laquelle le matériau plastique thermoplastique comprend un mélange

  a) d'un élastomère thermoplastique de réticulation qui présente dans la plage de 120 à 150 °C une très bonne fluidité et un indice de fluidité d'au moins 15 g/10 min (190 °C/2,16 kg, mesuré selon ISO 1133-1) et
  b) d'un matériau à changement de phase avec une température de changement de phase qui se situe entre 40 °C et 140 °C, dans laquelle le matériau à changement de phase est contenu dans le matériau plastique thermoplastique dans une proportion de 50 à 85 % en poids.

**2.** Bobine selon la revendication 1, **caractérisée en ce que** l'élastomère thermoplastique de réticulation est un copolymère à blocs contenant du styrène, de préférence du styrène/butadiène/styrène (SBS), du SEBS, du SEPS, du SEEPS et du MBS, et est présent dans une proportion d'au moins 10 % en poids, de préférence entre 15 °% en poids et 25 % en poids par rapport au poids du matériau plastique.

3. Bobine selon la revendication 1 ou 2, **caractérisée en ce que** le matériau à changement de phase présente une température de fusion entre 40 °C et 140 °C et de préférence est un éther d'alcool, un éther de dialkyle, une paraffine ou une cire naturelle ou synthétique.

4. Bobine électrique selon l'une quelconque ou plusieurs des revendications 1 à 3, **caractérisée en ce que** la température de décomposition du matériau plastique thermoplastique se situe au-dessus de la température de fonctionnement critique de la bobine électrique.

5. Bobine électrique selon l'une quelconque ou plusieurs des revendications 1 à 4, **caractérisée en ce que** le matériau à changement de phase est contenu dans le matériau plastique thermoplastique dans une proportion de 70 à 85 % en poids.

6. Bobine électrique selon l'une quelconque ou plusieurs des revendications 1 à 5, **caractérisée en ce que** le matériau plastique thermoplastique contient des additifs fonctionnels qui augmentent la conductivité thermique, qui augmentent la densité, qui influent sur la fluidité de la matière fondue et/ou agissent en tant qu'agents ignifuges.

7. Bobine électrique selon la revendication 6, **caractérisée en ce que** la proportion des additifs fonctionnels représente 0 à 20 % en poids, par rapport au poids total du matériau plastique thermoplastique.

8. Bobine électrique selon l'une quelconque ou plusieurs des revendications 1 à 7, **caractérisée en ce qu'**elle est entourée par une couche protectrice externe qui retient le matériau plastique thermoplastique également lors d'une application pour des enroulements de rotor dans la bobine, dans laquelle la couche protectrice se compose de préférence de PE, de PP, de PA, de PMMA, de PS ou de PVC et présente de préférence une épaisseur de 100 à 500 $\mu$m.

9. Bobine électrique selon l'une quelconque ou plusieurs des revendications 1 à 8, **caractérisée en ce qu'**elle est un composant d'un transformateur, d'un convertisseur ou d'un rotor ou stator d'une machine électrique, où ces bobines ne sont appropriées que pour être toujours brièvement en service, c'est-à-dire dans la plage de quelques secondes à 10 minutes, répétée à intervalles plus ou moins grands.

10. Bobine électrique selon l'une quelconque ou plusieurs des revendications 1 à 9, **caractérisée en ce que** l'élastomère thermoplastique de réticulation présente un indice de fluidité d'au moins 20g/10 min (190 °C/2,16 kg, mesuré selon ISO 1133-1).

11. Bobine électrique selon l'une quelconque ou plusieurs des revendications 1 à 10, **caractérisée en ce que** le matériau à changement de phase présente une température de changement de phase entre 80 et 130 °C.

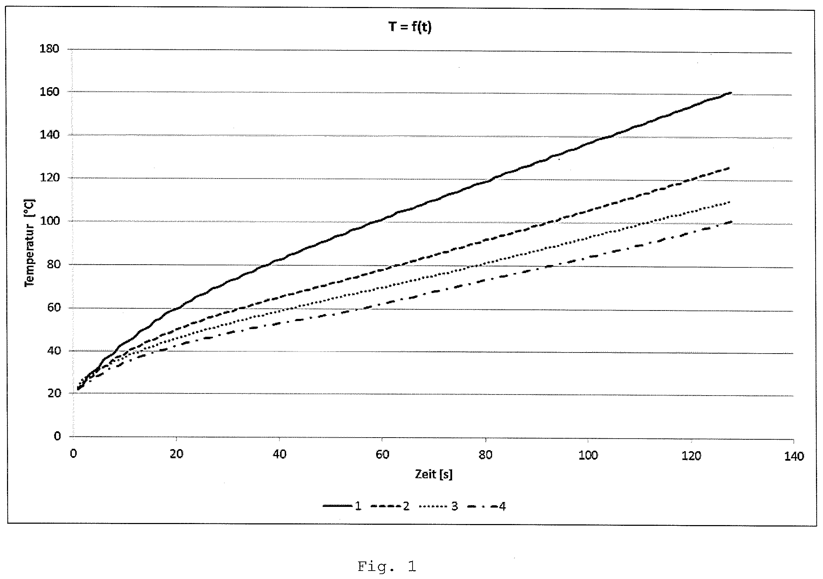

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19928323
- US 20130264896 A
- US 2004056537 A1
- EP 2637176 A1

- US 2006124892 A1
- DE 102013215255 A1
- DE 10329583 A1